# EUROPEAN PATENT APPLICATION

(11) **EP 3 805 819 A1**
(43) Date of publication of application: **14.04.2021**
(21) Application number: 19209187.4
(22) Date of filing: 14.11.2019
(51) Int. Cl.: G02B 5/18, G02B 27/00, G03B 17/08, G03B 17/17, H04N 5/225

(54) **LIGHT-FIELD SENSOR, LIGHT-FIELD SENSOR ARRANGEMENT AND CAMERA APPARATUS**

(30) Priority: 08.10.2019 EP 19201922
(71) Applicant: FRAUNHOFER-GESELLSCHAFT zur Förderung der angewandten Forschung e.V., 80686 München (DE)
(72) Inventor: BRINK, Gunnar, 76131 Karlsruhe (DE); PAK, Alexey, 76131 Karlsruhe (DE); WILLERSINN, Dieter, 76131 Karlsruhe (DE)
(74) Representative: Pfitzner, Hannes

(57) **Abstract**

An embodiment of the present invention provides a light-field sensor arrangement comprising a light field sensor and a collecting mirror which is configured to collect light from the object and direct it towards the light-field sensor.

## Description

Embodiments of the present invention refer to a camera apparatus or especially to an underwater camera apparatus. According to preferred embodiments, the invention describes a highly sensitive underwater camera that digitally captures light field (LF) snap shots or sequences of LF snapshots.

The steadily rising interest to exploring deep oceans drives a demand for safe, lightweight, and efficient underwater sensors capable of operating at large depths (down to 11000 m). Especially important for many applications are optical imaging cameras. Recording images deep underwater is a challenging problem due to high ambient pressure and limited amount of light in the scene: all natural light sources (such as bioluminescence) are extremely dim, and bright artificial illumination draws energy from batteries and disturbs fragile deep-water ecosystems.

Recent developments are based on the finding that mirror-based optics can be beneficially combined with a sensor chip to form a pressure tolerant system for underwater applications. Mirror based optics can provide a large aperture so as to handle the limited amount of light and, further, can be used in combination with a liquid in housings (typical construction of a pressure tolerant camera) without having significant drawbacks to the optics. However, such mirror-based optics do not naturally provide a solution for realizing a focusing mechanism.

Under normal circumstances, i.e., within the regular atmosphere, so-called light field cameras can be used to focus at various distances. It is known from the literature that LF data in principle contains more information than images made by a regular camera. In particular, by processing a single LF snapshot one may recover (1) multiple synthetic images of the observed scene focused at various distances (without physical lens re-focusing) and (2) the depth map of the scene (i.e. distances to objects and their shapes). However, such light field cameras available for underwater applications are not optimal with regard to their optical properties and cost efficiency. Therefore, there is the need for an improved approach.

It is the objective of the present invention to provide a concept for a light field camera having a better tradeoff between applicability, especially underwater applicability, picture quality, and cost.

This objective is addressed by the subject matter of the independent claims.

An embodiment (main aspect) of the present invention provides a light-field sensor arrangement comprising a light field sensor and a collecting mirror which is configured to collect light originating from the object and direct it towards the light-field sensor.

According to further embodiments, the volume surrounding the collecting mirror and/or the light-field sensor, e.g., the space between the collecting mirror and the light-field sensor can be filled with a transparent liquid or another transparent material. This filling enables to beneficially construct such a light-field sensor in a pressure tolerant manner (to operate the elements at the external pressure, e.g., for undersea applications).

Embodiments of the present invention are based on the finding that by use of a mirror-based optic in combination with a light-field sensor, a camera for underwater use or pressure tolerant applications is formed, wherein this camera enables to adapt the focus due to the light-field sensor. In other words, this means that the objective is based on reflective optics (mirrors) collecting the light arriving from the object and directs it towards the LF sensor. The latter captures instantaneous snapshots of the resulting LF in some form. From these data, during the post-processing one may extract e.g. synthetic images focused at various distances from the camera. The above discussed design allows the use of arbitrary sensor chips within the LF sensor unit (e.g. such as matrices of single-photon avalanche diodes - SPADs - that may sense individual photons) together with very large-aperture optics in order to enable ultra-high-sensitive imaging under exceptionally weak natural illumination (such as bioluminescence).

Note that according to embodiments the reflective objective may have multiple mirrors; the size and weight of such a system are usually dominated by its primary mirror.

According to embodiments (side aspect), the light-field sensor can be implemented by use of a diffractive element, i.e., the sensor chip is coupled to a diffractive element. Alternatively, a light-field sensor can be implemented by use of a mirror array comprising at least two mirrors or micro mirrors.

Another embodiment provides a light-field sensor comprising a sensor chip and a diffractive element. A diffractive element is configured to image an object to the sensor chip so as to enable light field capturing by focusing rays incident at different sensor locations and those incident at the same location but at different angles to different pixels of the chip. Here, the diffractive element serves as a non-refractive replacement for a micro lens array. Note that a space surrounding the diffractive element and/or the sensor chip can be filled with a transparent liquid or a transparent material.

Embodiments of this aspect of the invention are based on the finding that diffractive elements in combination with a sensor chip enable to form a light-field camera without the need for using lenses, which can, especially when used in a liquid-filled scheme, have drawbacks to optical and other properties of the device. Expressed in other words, this means that the diffractive element realizes a light-field camera with beneficial optics, especially for scenes with a small amount of light in the scene.

According to further embodiments, the diffractive element can be implemented as a diffractive plate, a grating and/or a photo sieve.

A further embodiment (according to another side aspect) provides a light-field sensor comprising a sensor chip and a mirror array. The mirror array may comprise at least two mirrors, wherein at least two mirrors are configured to image notable image portions of the object to the sensor chip. For example, the array can have a plurality of mirrors or micro mirrors.

Embodiments of this aspect are based on the finding that, by use of a mirror array in combination with a sensor chip, a light-field sensor can be formed. Such mirrors are, as already discussed, applicable to be used in combination with a liquid filler or another filler, such that a pressure tolerant system can be formed. Furthermore, mirrors do not have drawbacks in combination with liquids, when compared to lenses, so that beneficial optical properties can be achieved.

Within embodiments, at least two mirrors are arranged side by side along a line and/or angled with respect to the object, so as to enable light field capturing by focusing rays incident at different sensor locations and those incident at the same location but at different angles to different pixels of the chip.

According to further embodiments, the mirror array may comprise a K-lens [13], which is a system of multiple flat mirrors arranged to implement a "kaleidoscope" path of view rays. Here, a K-lens may be arranged in front of a sensor chip for implementing an LF sensor.

All of the above discussed light-field sensors can be coupled to the objective collecting mirror (cf. main aspect), which is configured to collect the light arriving from an object onto the LF sensor or multiple LF sensors. For example, a single large-aperture reflective surface may according to further embodiments serve multiple sensors located at different positions and implementing different tasks. According to embodiments, the aperture of the optical system may have an arbitrary, e.g., non-circular, shape. Note that the used mirrors (e.g. those of the array and/or the collecting mirror) may be implemented as polished outer surfaces of a solid transparent filler block with a reflective coating. Some mirrors may be concave or convex or may have a free form. The combination of a free-form mirror and an LF sensor may be designed to solve multiple observation tasks in a single device, e.g. combine the surround-view capability with large-zoom high-resolution inspection, or map separate view directions on a single sensor.

For the sake of completeness, it should be noted that also other light-field sensors can be used as well. These provide also benefits with respect to the applicability in combination with a fluid and without the need for lenses or mechanical focus adjustment.

For example (according to an embodiment), a light-field sensor may comprise a plurality of semitransparent sensor chips arranged along an entrance direction of an image of an object to be recorded so that each of the plurality of semitransparent sensor chips receives a differently focused image portion of the object.

According to another embodiment, a light-field sensor may comprise a plurality of semi-transparent mirrors coupled to a plurality of sensor chips. Here, the semi-transparent mirrors are arranged along an entrance direction of an image of an object to be recorded so that each of the plurality of semi-transparent mirrors receives, collects and projects a differently focused image portion of the object to the respective sensor chips.

A plurality of semi-transparent chips or the plurality of semi-transparent mirrors may be - according to embodiments - arranged one after another along the light entrance direction.

All the above discussed light-field sensors may, according to embodiments, couple to a processor which is configured to receive image data output by the sensor chip and to store all output image data, wherein the image data processing enables a refocusing to the object.

The above-discussed solution comprising a light-field sensor arrangement and different types of light-field sensors encompasses a pressure tolerant system for underwater imaging with a large aperture, i.e., with high sensitivity and reduced light losses. The light field capturing solves the problem of a limited depth of focus and facilitates the 3D assessment of underwater scenes. Compared to an air-filled camera with a pressurized container, the invention is fundamentally safer due to a reduced (or even eliminated) risk of implosions. Furthermore, it is beneficial that the aperture is not limited by the available sizes of reinforced transparent windows. A further advantage of liquid-filled optics is the absence of low RI regions in the light path which leads to lower light losses (cf. "Snell's window" effect). Note, the basic design is simple and has no moving parts, which is beneficial for mass production. Preferred embodiments may have in common that they are implemented without refractive optics (lenses).

Another embodiment provides a camera, especially an underwater camera comprising the light field sensor as it has been discussed above. Since the camera has no moving parts, the filling liquid may be replaced with e.g. a transparent plastic for a greater mechanical stability and simpler maintenance. Compared to known attempts of underwater LF capture (based on air-filled optics), the proposed solution offers smaller sizes, ability to operate at larger depths, and reduced losses of light. When compared to the existing (directly imaging) deep underwater camera constructions with an equivalent resulting image quality, the proposed camera offers smaller weight, simpler constructions, and higher safety of operation. Alternatively, given fixed weight and space constraints, the proposed camera may operate at significantly lower illumination intensity. Together, these features may potentially enable novel applications and operation modes for underwater imaging.

According to further embodiments, the camera may comprise a housing. This housing can be filled with a liquid, a transparent liquid or another transparent material. This enables a pressure tolerant structure so that the internal pressure within the housing substantially matches the external pressure outside of the housing. Expressed in other words, this means that, according to further embodiments, the space between the sensor chip and the microlens array, a diffractive element, or a micro-mirror array is filled with a transparent liquid or another transparent material, so that a pressure on the sensor chip, on the mirror array or on the image multiplier substantially matches the external pressure applied to the housing.

Note, that the camera housing may be lighter than a pressurized container and e.g. have a shape adjusted to the outer contours of the carrier vehicle to reduce hydrodynamic drag. (Typical ports for dry lenses have a dome shape and may protrude from the vehicle's contour.)

According to embodiments, the camera may comprise an illumination device.

According to embodiments, a camera may comprise diffractive optics instead of refractive optics in the objective and/or comprise large gratings or photon sieves instead of large mirrors.

Embodiments of the present invention will subsequently be discussed referring to the enclosed figures, wherein
- Fig. 1: shows a schematic block diagram of a regular LF sensor based on a micro lens array in front of a sensor chip;
- Figs. 2a, 2b: show schematically light field sensors based on micro-mirror arrays according to embodiments;
- Fig. 3: shows schematically an LF sensor based on a planar diffractive element according to embodiments;
- Fig. 4: shows schematically a pressure tolerant camera with reflective optics and an LF sensor according to embodiments; and
- Fig. 5, 6: show schematically LF sensors based on multiple imaging matrices and semi-transparent mirrors according to embodiments.

Embodiments of the present invention will subsequently be discussed referring to the enclosed figures, wherein identical reference numbers are provided for objects having identical or similar functions.

Before discussing the embodiments of the present invention in detail, the background, why conventional light field cameras are not applicable to underwater applications, will be discussed. Prior art approaches will be discussed as well as the reasons why these prior art approaches are not be optimally applicable to underwater applications in order to provide a solution for the above defined objective.

Almost all commercially available deep underwater imaging cameras rely on multi-lens objectives designed to operate in air; therefore, a camera together with the lens must be placed in a heavy pressurized container with a transparent window [1, 2]. The reinforced window (which, as a rule, is at most a few inches in size) limits the system aperture and therefore the light sensitivity of the camera. Further, a significant part of the incident light is lost due to inner reflections on air-glass boundaries (Snell's window effect). With that, photo or video shooting underwater requires powerful illumination. Finally, pressurized containers are fundamentally unsafe: an implosion of a container at a large depth generates a shock wave that may damage or even destroy the carrier vehicle [3].

LF capturing is a relatively new technique [10] that is presently the focus of intensive research. Applications to (shallow) underwater imaging are known [12], including 3D reconstruction and computational refocusing. In these (non-systematic) experiments, a generic LF camera was enclosed in a pressurized container. To the best of our knowledge, there have been no systematic studies of LF camera benefits for underwater imaging. We also have no information about their deep-water adaptations.

One way to avoid a heavy pressurized container is to fill all of the camera's inner volumes with an incompressible liquid and equalize the internal pressure with the environment. As demonstrated in [4, 5], this approach is feasible (in particular, digital imaging sensors and electronics are inherently pressure-tolerant [5, 6], but the increased refractive index (RI) of the medium necessitates a different optical design of the objective. The high-RI medium (e.g., 1.333 for water vs 1.0 for air) typically leads to larger and heavier lenses needed to reach a given level of optical performance. On the other hand, liquid-filled optics reduce light losses and have been found useful even for non-underwater applications [7, 8].

Recently, a proposal was made [9] to replace lenses in liquid-filled cameras with mirrors. This resolves the issue of heavy large-aperture lenses, and renders the optical design independent of the filling liquid due to the (medium-agnostic) reflection law. However, perspective mirror-based objectives are less common than lens-based ones; in particular, re-focusing of a reflective objective remains a difficult problem that requires significant efforts to solve. These may appear too costly for the [still relatively small] market of underwater cameras. Without re-focusing, a fixed large-aperture mirror produces a sharp image only at a pre-defined distance with a relatively small tolerance (depth-of-focus). For example, consider a camera where a mirror of 30 cm in diameter is adjusted to produce a sharp image of an object (e.g., a fish) located at the distance of 5 m from the camera. If we want to resolve 1-cm features on the object, it must be located within 17 cm from this distance (0.01 ^{∗} 5.0 / 0.3 m), i.e. the effective depth of field in this case is only 34 cm. Therefore, re-focusing is a crucially important feature for (all sorts of) large-aperture optics.

In most lens-based objectives, re-focusing is implemented mechanically via motion of some optical elements. As mentioned above, in case of a liquid-filled mirror-based camera, this would lead to a relatively complex and expensive optomechanical design. More importantly, mechanical re-focusing does not solve the problem of a shallow depth-of-field (multiple objects or distant parts of a large object in the frame cannot be sharp simultaneously), and is relatively slow. The camera (or its operator) should also decide on-line which objects in the frame should be in focus and discard the remaining potentially interesting targets. For underwater imaging with possibly unexpected observations and a limited illumination budget, these drawbacks may become critical.

As mentioned above, LF sensing appears to be the natural solution to the focusing problem: the camera needs no moving parts and all the objects in the frame may be sharply resolved during the off-line data processing. It is known from the literature that LF data in principle contain more information than the images made by a regular camera [10]. In particular, by processing a single LF snapshot one may recover (1) multiple synthetic images of the observed scene focused at various distances (without physical lens re-focusing), and (2) the depth map of the scene (distances to objects and their shapes).

By combining liquid-filled pressure-neutral mirror-based optics with an LF sensor one may create a sensitive, simple, and robust underwater camera. The most straightforward way to incorporate an LF sensor is to protect it with a pressurized housing. This would already be an improvement, as a housing needed for a sensor is much smaller than that for the entire camera. However, this would not circumvent the Snell's window effect and will make the construction unnecessarily bulky and complex.

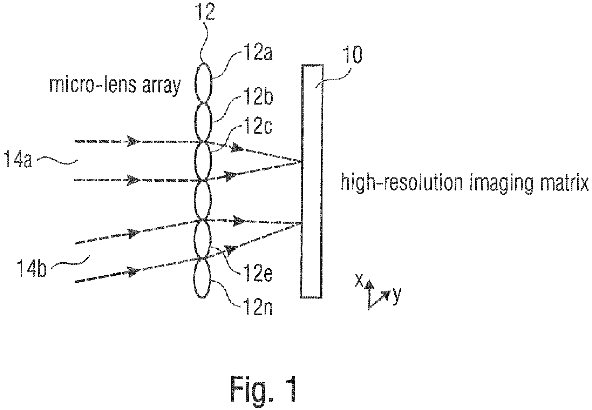

A more elegant way would be to fill the sensor with liquid. Unfortunately, the most popular LF sensor designs would not allow that. With respect to Fig. 1, a regular planar LF sensor based on a micro lens array will be discussed.

Fig. 1 shows a combination of a high-resolution imaging matrix 10 with a micro lens array 12 which is arranged in front of the sensor 10 (when seen along the entrance direction of the sensor 10).

The high-resolution imaging matrix can comprise an imaging chip, like a pixel matrix having a plurality of pixels arranged at least within two directions (x and y). Each pixel can comprise sub-pixels for the different colors (e.g., RGB). Furthermore, it is possible that some pixels or the sub-pixels may be arranged in a 3D manner, i.e., along the Z direction. The micro lens array 12 may comprise a plurality of micro lenses 12a, 12b, 12m which are configured to project light rays incident on the micro lens array 12 (cf. reference numerals 14a and 14b) onto the imaging matrix 10. As can be seen, light rays 14a and 14b arriving from different directions are focused using the different lenses 12c and 12e onto different physical pixels behind the respective lenses.

Here, a planar LF sensor captures the LF by sampling intensities incident at a given sensor element (pixel), and in addition utilizes the high resolution of the pixel matrix to resolve intensities arriving from different angles. The role of e.g. micro-lenses is to direct light rays arriving at different sensor locations ("super-pixels") and those incident at the same location but from different directions to different physical pixels of the underlying chip.

For a medium other than air or vacuum, the micro lenses 12a to 12m must be completely re-designed and, in particular, become thicker and perhaps larger. This would reduce the resolution of the sensor arrangement and possibly its numerical aperture. Such a device again would be costly (given a small number of required units) and offer inferior performance compared to air-filled LF cameras.

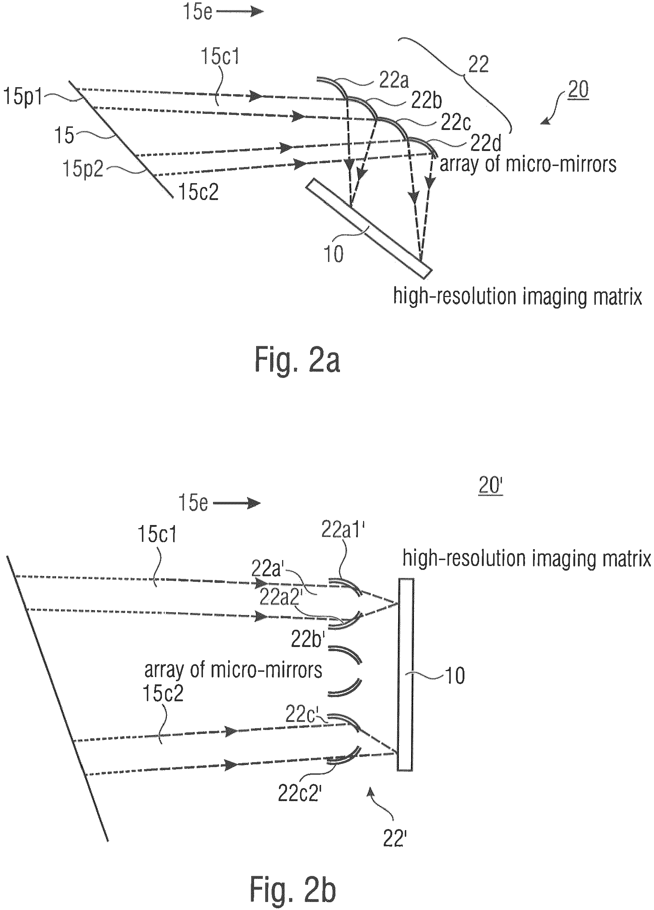

As a solution to this problem, the LF sensor 20 as shown in Fig. 2a or the LF sensor 20' as shown in Fig. 2b can be used. Both approaches are based on non-refractive optics (i.e., without lenses). In particular, Fig. 2a and 2b shows two micro-mirror-based approaches.

Fig. 2a shows an LF sensor 20 comprising a sensor chip 10, e.g., a high-resolution imaging matrix and an array 22 comprising at least two, preferably a plurality (more than two), of mirrors. These mirrors are marked by the reference numerals 22a, 22b, 22c and 22d. Light from the object 15 arrives at the mirror array 22 substantially within the entrance direction 15e. As can be seen, two light beams 1511, 1512 are illustrated. Both originate from the object 15, wherein the object is arranged within the space, such that different portions of the object have a different distance to the sensor 20. The result of the different distances of the two portions 15p1 and 15p2 of the object 15 is the need for refocusing to different planes. The background thereof is that the path of rays 1511 and 1512 differ from each other so that the focus point typically differs as well. Due to the usage of the array of micro-mirrors, the portions 15p1 and 15p2 having a different distance to the LF sensor 20 are projected to the sensor chip 10 in a manner that adapts the information and can be extracted or that the data comprises information taken out of different depths of field. This enables one to focus on the different portions 15p1 and 15p2 afterwards.

Regarding the structure, it should be noted that the sensor 10 and the plane along which the micro-mirrors 22a and 22d are arranged may be installed substantially in parallel to each other. Furthermore, the mirror array 22 is installed at such an angle with respect to the entrance direction 15a so that the reflected light beams 1511 and 1512 are projected to the sensor chip 10 in order to enable light field capturing by focusing rays incident at different sensor locations and those incident at the same location but at different angles to different pixels of the chip.

Here, an extended LF sensor 20 captures the LF by sampling local intensities at different points in space.

Fig. 2b shows another arrangement. Here, the sensor chip 10 is coupled with a different type of mirror array 22'. Here, mirror array 22' consists of a "sieve" with mirrors 22a', 22b' and 22c' forming multiple "concentrator cones"; two sides of the cone are marked by 22a1', 22a2', ..., 22c2',22a' and 22b'. Each cone 22a', 22b' and 22c' is a direct replacement of a micro-lens and focuses the light beams 1511 and 1512 to the sensor chip 10. Here, all micro-mirrors 22a' to 22c' of the array 22' are, for example, arranged in a plane, which is substantially parallel to the sensor 10. The sensor 10 as well as the array 22 is substantially perpendicular to the entrance direction 15e.

Note, according to embodiments, the mirrors 22a, 22b, 22c and 22d as well as the mirror elements 22a1', 22a2' to 22c2' can have a curved shape, e.g., a concave shape, as is illustrated in Fig. 2a and 2b or a convex shape.

As has been discussed in context of the [9], the usage of mirrors for underwater cameras, especially pressure neutral underwater cameras, is beneficial with regard to the optical properties, when compared to lenses. The background thereof is that the space between the sensor 10 and the array 22 or 22' can be filled with a liquid or another transparent material, wherein this liquid does not have an influence to the optical properties of the optical elements 22, 22'. The background thereof is that the most popular LF sensors using a micro lens array 12 would not tolerate filling this volume with a liquid. Such a sensor typically contains a high-resolution image chip and a micro lens array in front of it (cf. Fig. 1). These drawbacks can be overcome by the usage of the mirror arrays 22 and 22'.

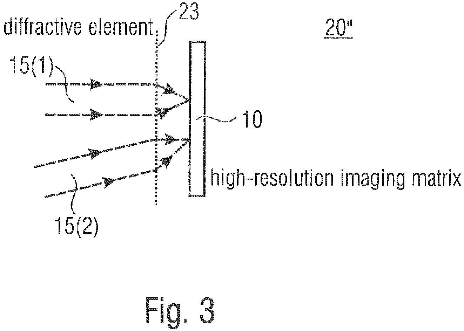

According to further embodiments, instead of micro-mirror technologies other optics can be used. For example, a simple and technically beneficial way to implement an LF sensor for a liquid filled camera is to rely on diffractive optics. This embodiment is illustrated by Fig. 3.

Fig. 3 shows an LF sensor 20" that contains the sensor chip 10 in combination with a diffractive element 23, arranged in front of it and configured to image the light beams 1511 and 1512 in a comparable manner when compared to the embodiments of Fig. 1. Here, the diffractive element 23 can be a diffractive plate (e.g., a diffractive grating or a photon sieve) replacing the micro lens array. Such diffractive elements/diffractive plates are easily adjustable for any medium by changing the diffractive pattern.

The simplicity and low price of the diffractive element 23, which may be as simple as a pattern printed on a glass plate) allow a large freedom of optical design which may be facilitated by many conventional tools. In general applications, diffractive optics are sometimes avoided due to their high spectral selectivity. For underwater imaging, however, the spectrum of the incident light is mostly determined by the (fixed and known) illumination. According to embodiments, the LF sensor (e.g. 20" of Fig. 3) can be combined with an illumination source. Both elements can be optimized (together) for the optimal performance.

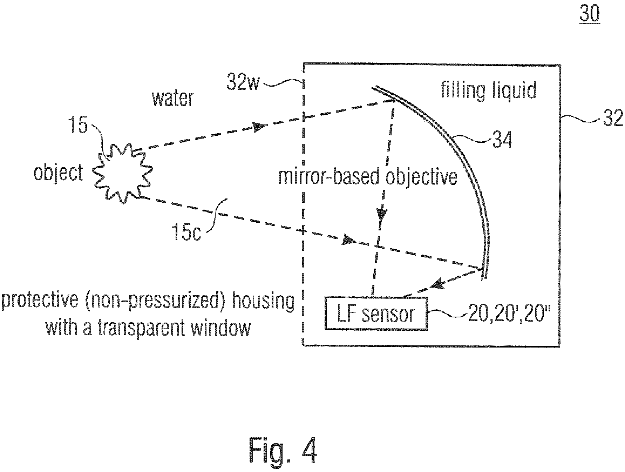

With respect to Fig. 4, an application of the LF sensor 20, 20' and/or 20" is shown.

Fig. 4 shows a camera 13 comprising a housing 32, and within the housing at least one LF sensor 20, 20' or 20" is arranged. Here, the housing 32 can be filled with a liquid. Note that instead of transparent liquid (oil or alcohol), the inner volumes in the device may be filled with a transparent plastic. In fact, such implementation has benefits for compact mass-produced devices.

Furthermore, the housing 32 has a transparent window 32w facing the object 15. According to the preferred application, the camera 30 is used being surrounded by water, for instance. The light beam 151 of the object is received via the window 32 and received by the LF sensor 20, 22', 22". Here, an optional mirror based objective 34 is used. This is arranged within the housing 32 and configured to collect the light beam 151 and re-direct it to the LF sensor 20, 20' or 20".

The projective (non-pressurized) housing 32 with the transparent window 30w may be operated at the external pressure of the water. Consequently, all elements within the housing 32, e.g., the sensor 20, 20', 20", are subject to the same pressure.

Note, the primary role of mirror-based optics in the proposed design is to enable large apertures while minimizing the system weight and size. If the weight and lens thickness are not an issue, similar functionality may be implemented with refractive, catadioptric (combining mirrors and lenses), or diffractive primary optics.

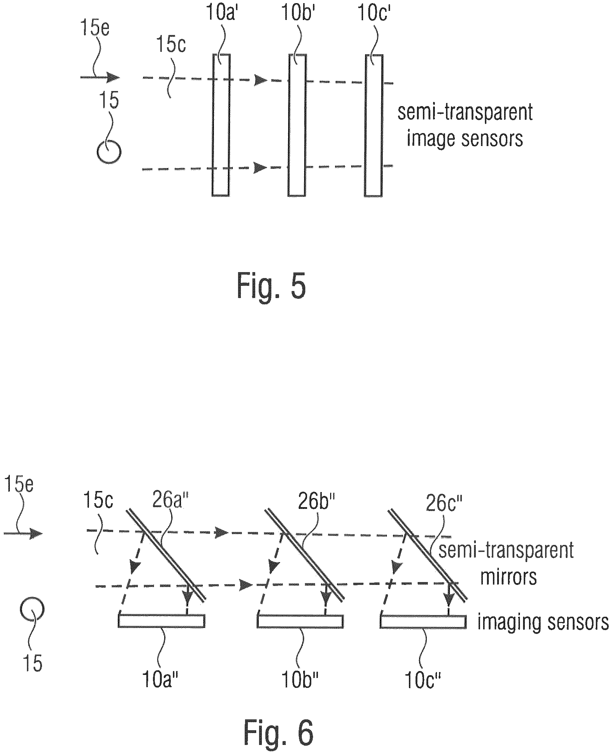

With respect to Fig. 5 and Fig. 6, other arrangements based on other LF sensors are used. In other words, Fig. 5 and Fig. 6 show light fields imaging devices looking differently than "regular" plenoptic sensors, but in practice may (partially) reproduce their functionality.

Fig. 5 shows an arrangement of the plurality, here three, semitransparent image sensors 10a', 10b' and 10c'. The image sensors 10a' to 10c' are arranged one after the other (and all substantially parallel to each other) so that a light beam 151 coming from the entrance direction 15e can be received by all semitransparent image sensors 10a' to 10c'. For this, the sensor chips 10a' to 10c' are substantially perpendicular to the direction 15e.

Since the semitransparent imaging matrices are arranged with a different distance with respect to the object 15, the focus adjustment is implemented by choosing the image values from the respective sensor chip.

Fig. 6 shows another LF camera. Here, three image sensors 10a" to 10c" are used. These image sensor 10a" to 10c" are arranged side-by-side, e.g., in parallel to the direction 15e. A plurality of semitransparent mirrors 26a" to 26c" are configured to project the light beam 15l to the respective image sensors 10a" to 10c" while enabling light field capturing by focusing rays incident at different sensor locations, and those incident at the same location but at different angles to different pixels of the chip. For this, each image sensor 10a" to 10c" is coupled with a respective semitransparent mirror 26a" to 26c".

Here, the semitransparent mirrors, especially the semitransparent mirror 26a" and 26b" are configured to forward the light 151 along the direction 15e while projecting a portion of the light to the respective image sensor 10a", 10b" and 10c".

Both embodiments of Fig. 5 and Fig. 6 can have the liquid-filled design. Furthermore, both embodiments enable a large aperture optics and their functionality for light field sensing. The key features are high sensitivity (and, in particular, reduced light losses in the objective) and the ability to re-focus during post-processing.

Different embodiments in context of (underwater) LF capturing have been discussed above. These embodiments have a common idea, namely to implement an underwater camera without the drawbacks of the prior art. The main embodiments can be summed up as follows:
1. An "LF camera" combining a mirror-based objective and an LF sensor;
2. The space inside the camera is filled with a transparent liquid or solid medium;
3. The LF sensor consists of a diffractive element (DE) and a camera imaging chip;
4. The DE implements an optical function equivalent to micro-lenses in conventional plenoptic designs;
5. The entire LF sensor is filled with a transparent liquid or solid medium, including the space between the chip and the DE.

Regarding the sensor chips, it should be noted that the assumed imaging sensors in the Invention typically are based on CMOS or CCD technology. However, any alternative photon sensing technology could be employed, such as photomultipliers, iCCD, SPAD, event cameras, logarithmic sensors, etc. Alternatively, for some special applications (e.g., where only point-like sources are expected) one may employ a non-imaging sensor, such as Shack-Hartmann, Schlieren, pyramid or any other wavefront sensor. The resulting data represent a (low-resolution) subset of full LF snapshots, and therefore may be assumed as conforming to the description above.

The primary intended application domain of the invention is underwater imaging for recreational, scientific, military, and other purposes at medium to large depths underwater. However, the combination of high sensitivity and the effectively unbounded depth of field may be of interest for e.g. airborne or space surveillance tasks. To that end, the solid plastic-filled implementations may be interesting due to higher stability and tolerance to vibrations and mechanical loads. Therefore, a camera arrangement having one of the above discussed LF sensors 22, 22' or 22" is defined by another embodiment, wherein these cameras may be used surrounded by air or vacuum.

### References:

[1] K. Hardy, T. Bulman, J. Cameron, S. Pausch, L. Herbst, "Hadal Landers: the DEEPSEA CHALLENGE ocean trench free vehicles". Proc. OCEANS 2013, 1-10, (2013)
[2] D. Slater, "A focal viewpoint optics for underwater imaging". Proc. SPIE 9192 91920P (2014).
[3] D. Cressey, "Submersible loss hits research". Nature 509, 408-409 [2014].
[4] G. Stamm and A. Rockman, "A simple, water-flooded camera for underwater photography". Proc. SPIE 0024, 65-70 (1971)
[5] J. Gelze and H. Lehr, "On the way to a pressure-tolerant imaging system". Proc. OCEANS 2011, 1-4 (2011).
[6] J. Holzschuh, "A pressure-tolerant TV camera". IEEE Journal of Oceanic Engineering EO-3(1), 22-27 (1978).
[7] R. Sigler, "Apochromatic color correction using liquid lenses". Applied Optics 29, 2451-2459 (1990)
[8] E. Kelley, "Simulated-eye-design camera for high-contrast measurements". Proc. SPIE 3636, 184-190 (1999).
[9] German patent DE 10 2018 206 771, "Unterwasserkamera sowie Unterwasserfahrzeug mit einer Unterwasserkamera".
[10] E. Lam, "Computational photography with plenoptic camera and light field capture: tutorial". Journal of Optical Society of America A 32 (11) 2021-2032 (2015).
[11] A. Yöntem, D. Chu, "Design of micro photon sieve arrays for high resolution light-field capture in plenoptic cameras", Proc. 3DTV 2018
[12] J. Rodrigues-Ramos et al, "New developments at CAFADIS plenoptic camera", Proc. 10th Euro-American Workshop on information Optics 2011.
[13] US patent US20160057407A1, "Plenoptic imaging device".

## Claims

1. Light-field sensor arrangement comprising:
A light-field sensor (20, 20', 20"); and
a collecting mirror (34) which is configured to collect the light originating from the object (15) and direct it towards the light-field sensor (20, 20', 20").

2. The light-field sensor arrangement according to claim 1, wherein the volume surrounding the collecting mirror (34) and/or the light-field sensor (20, 20', 20") is filled with a transparent liquid or a transparent material.

3. A light-field sensor arrangement according to claim 1 or 2, wherein the light-field sensor (20, 20', 20") comprises a diffractive element (23) configured to enable light field capturing by focusing rays incident at different sensor locations and those incident at the same location but at different angles to different pixels of the sensor chip (10, 10a', 10b', 10c', 10a", 10b", 10c") or comprises a mirror array (22, 22') comprising at least two mirrors (22a, 22b, 22c, 22d, 22a', 22b', 22c') and configured to enable light field capturing by focusing rays incident at different sensor locations and those incident at the same location but at different angles to different pixels of a sensor chip (10, 10a', 10b', 10c', 10a", 10b", 10c") of the light-field sensor (20, 20', 20").

4. A light-field sensor (20, 20', 20") comprising:
a sensor chip (10, 10a', 10b', 10c', 10a", 10b", 10c"); and
diffractive element (23) configured to enable light field capturing by focusing rays incident at different sensor locations and those incident at the same location but at different angles to different pixels of the sensor chip (10, 10a', 10b', 10c', 10a", 10b", 10c"); wherein a volume surrounding the diffractive element (23) and/or the sensor chip (10, 10a', 10b', 10c', 10a", 10b", 10c") is filled with a transparent liquid, or a transparent material.

5. The light-field sensor (20, 20', 20") according to claim 4, wherein the diffractive element (23) is implemented as a diffractive plate and/or a grating and/or a photon sieve.

6. The light-field sensor (20, 20', 20") comprising:
a sensor chip (10, 10a', 10b', 10c', 10a", 10b", 10c"); and
a mirror array (22, 22') comprising at least two mirrors (22a, 22b, 22c, 22d, 22a', 22b', 22c'), wherein the at least two mirrors (22a, 22b, 22c, 22d, 22a', 22b', 22c') are configured to enable light field capturing by focusing rays incident at different sensor locations, and those incident at the same location but at different angles to different pixels of the sensor chip (10, 10a', 10b', 10c', 10a", 10b", 10c").

7. The light-field sensor (20, 20', 20") according to claim 6, wherein the mirror array (22, 22') comprises a plurality of mirrors (22a, 22b, 22c, 22d, 22a', 22b', 22c') or micro-mirrors.

8. The light-field sensor (20, 20', 20") according to one of the claims 6 or 7, wherein at least two mirrors (22a, 22b, 22c, 22d, 22a', 22b', 22c') are arranged side by side along a line or at an angle with respect to the object, so as to enable light field capturing by focusing rays incident at different sensor locations and those incident at the same location but at different angles to different pixels of the sensor chip (10, 10a', 10b', 10c', 10a", 10b", 10c") .

9. The light-field sensor (20, 20', 20") according to one of the claims 6 to 8, wherein the mirror array (22, 22') comprises a K-lens arranged to a kaleidoscope optics.

10. The light-field sensor (20, 20', 20") according to one of the claims 4 to 9, wherein the light-field sensor (20, 20', 20") is coupled to a collecting mirror (34) which is configured to collect the light originating from the object and direct it towards the mirror array (22, 22') or the diffractive element (23).

11. A light-field sensor (20, 20', 20") comprising:
a plurality of semitransparent sensor chips (10a', 10b', 10c') arranged along an entrance direction of an image of an object to be recorded so that each of the plurality of semitransparent sensor chips receives a differently focused image portion of the object; or
a plurality of semi-transparent mirrors (26a", 26b", 26c") coupled to a plurality of sensor chips (10a", 10b", 10c"), wherein the semi-transparent mirrors (26a", 26b", 26c") are arranged along an entrance direction of an image of an object to be recorded so that each of the plurality of semi-transparent mirrors (26a", 26b", 26c") receives and projects a differently focused image portion of the object to the respective sensor chips (10a", 10b", 10c").

12. The light-field sensor (20, 20', 20") according to claim 11, wherein the plurality of plurality of semitransparent sensor chips (10a', 10b', 10c') or the plurality of semi-transparent mirrors (26a", 26b", 26c") are arranged one after another along the entrance direction.

13. The light-field sensor (20, 20', 20") according to one of the previous claims further comprising a processor which is configured to receive data output by the sensor chip (10, 10a', 10b', 10c', 10a", 10b", 10c") and to store or output image data, wherein the image data enable a re-focusing to the object.

14. The light-field sensor (20, 20', 20") according to one of the previous claims, wherein the light-field sensor (20, 20', 20") is implemented without refractive optics.

15. A camera (30) apparatus or underwater camera (30) apparatus comprising the light-field sensor (20, 20', 20") according to one of the claims 4 to 14.

16. The camera apparatus (30) or underwater camera (30) apparatus according to claim 15, wherein the camera (30) apparatus or the underwater camera (30) apparatus comprises a housing (32).

17. The camera apparatus (30) or underwater camera (30) apparatus according to claim 16, wherein the housing (32) is filled with a transparent liquid, or a transparent material; and/or,
wherein the internal pressure within the housing (32) substantially matches the external pressure outside of the housing (32).

18. The camera apparatus (30) or underwater camera (30) apparatus according to one of the claims 15 to 17, wherein the space between the sensor chip (10, 10a', 10b', 10c', 10a", 10b", 10c") and the micro-array (22, 22') or the sensor chip (10, 10a', 10b', 10c', 10a", 10b", 10c") and the collecting mirror or the sensor chip (10, 10a', 10b', 10c', 10a", 10b", 10c") and the diffractive element (23) is filled with a transparent liquid, or a transparent material; and/or
wherein a pressure on the sensor chip (10, 10a', 10b', 10c', 10a", 10b", 10c"), on the mirror array (22, 22') or on the collecting mirror or on the diffractive element (23) substantially matches the external pressure.

19. A camera (30) apparatus or underwater camera (30) apparatus comprising diffractive optics instead of refractive optics in the objective and/or comprising large gratings or photon sieves instead of large mirrors.
